# EUROPEAN PATENT APPLICATION

(11) **EP 0 810 180 A1**
(43) Date of publication of application: **03.12.1997**
(21) Application number: 97830210.7
(22) Date of filing: 05.05.1997
(51) Int. Cl.: B67C 3/28, F16K 11/02, F16K 31/524

(54) **Multi-way diaphragm valve, in particular for automatic liquid filling machines**

(30) Priority: 30.05.1996 IT BO960292
(71) Applicant: MARCHESINI GROUP S.p.A., I-40065 Pian di Macina Pianoro (Bologna) (IT)
(72) Inventor: Monti, Giuseppe, 40065 - Pianoro, (Bologna) (IT)
(74) Representative: Dall'Olio, Giancarlo

(57) **Abstract**

A hydraulic valve includes a lower body (6), fastened to a carrousel platform (2) and provided with a diaphragm (25) featuring a channel (26) which faces said platform (2). The channel (26) extends to include bores (3,4,5) made in the platform (2) and communicating with a liquid supplying chamber, liquid delivery means, and pump means, respectively. The lower body (6) carries a rotating upper body (7), which can be rotated to take a liquid suction position and a liquid delivery position. The lower body (6) supports a pair of vertically sliding plungers (23,24) located in the region of the bores (3,4) and over the diaphragm (25) so as to act thereon. The plungers are operated alternately between a raised position, in which the bores (3,4) are opened and a lowered position, in which the bores are closed, when the upper body (7) is in the suction and distribution positions respectively.

## Description

The present invention concerns automatic machines for filling containers with liquids.

More exactly, the invention relates to a hydraulic multi-way valve, particularly suited to be used in these machines for filling containers with liquids.

At present, various types of automatic machines for filling containers like bottles or similar with liquids are known.

These machines usually include a carrousel rotating about a vertical axis, which receives, one by one, the bottles to be filled supplied by a feeding station.

The carrousel supports liquid delivery means, which cooperate cyclically with driving means connecting the bottles with respective liquid nozzle means.

Afterwards, the filled bottles are transferred to a go-away line.

A machine of this type is disclosed in the European Patent No. 0.486.440. This machine includes a liquid supplying chamber, disposed concentric to a carrousel platform in which there are made a plurality of channels connecting the supplying chamber with delivery means. The delivery means usually include a plurality of pump means, which communicate with a respective liquid feeding channel.

The feeding channels are connected to the liquid reservoir via respective valve means, arranged outside the carrousel.

In particular, in the solution disclosed in the above mentioned European Patent No. 0.486.440, these valve means feature a lower body fastened to a platform of the carrousel, and an upper body rotating with respect to this lower body.

A bore, passing across the upper body, communicates alternatively with a pair of conducts made in the platform in order to suck the liquid from the supplying chamber and to send this liquid to a delivery nozzle.

The object of the present invention is to propose a hydraulic multi-way valve which allows distribution of liquid in the best way, in particular in automatic containers filling machines similar to the one described in the European Patent No. 0.486.440.

The above mentioned object is obtained in accordance with the content of the claims.

The characteristic features of the invention will be pointed out in the following description, with particular reference to the enclosed drawings, in which:
- Figures 1a and 1b show schematic plan views of the subject valve, during liquid sucking and delivering steps, respectively;
- Figures 2a and 2b show schematic plan views of a particular of the subject valve, during the aforementioned liquid sucking and delivering steps;
- Figures 3a and 3b show a corresponding vertical section view of the valve, taken along the plane III-III of Figures 2a and 2b, during the liquid sucking and delivering steps;
- Figures 4a and 4b show a schematic plan view and a section view, respectively, of a different embodiment of the valve subject of the invention;
Figure 5 shows a detail of the valve illustrated in Figures 4a and 4b.

With reference to the above mentioned Figures, numeral 1 indicates a valve that connects pump means, carried by a carrousel fed with containers to be filled, alternately to a liquid supplying chamber and distributing nozzle, which are not shown.

The valve 1 is carried by a platform 2 integral with the rotating part of the carrousel.

A pair of bores 3, 4, made in the platform 2, communicate with the above mentioned liquid supplying chamber and the distributing nozzle, respectively, reported with reference to the European Patent No. 0.486.440.

Another bore 5, communicating with the aforementioned pump means, passes across the platform 2.

The axes of the bores 3, 4 and 5 are arranged on a circumference C concentric with the valve axis.

The valve 1 includes a lower body 6 fastened to the platform 2 of the carrousel and an upper body 7, which rotates, according the vertical axis of the valve 1, on a pin 8 formed on the lower body 6.

The upper body 7 is axially fastened to the lower body 6 by a washer 9, which is locked by a screw 10 axially screwed into the pin 8.

The pin 8 protrude also from the other part of the lower body 6, thus forming a shank 11 which extends on the same axis of the pin 8 and pass through a seat 12 of the platform 2.

The shank 11 has a threaded tang 13, on which a nut 14 is screwed for tightening to the platform 2.

The upper part 7 features a tubular portion 15 which is rotatably mounted by rolling bearings 16 on the pin 8 of the lower body 6.

A cap 17, acting as a cover for the valve 1, extends from the upper part of the tubular portion 15.

The cap 17 embraces peripherally a cylinder liner 18 which forms the case of the valve.

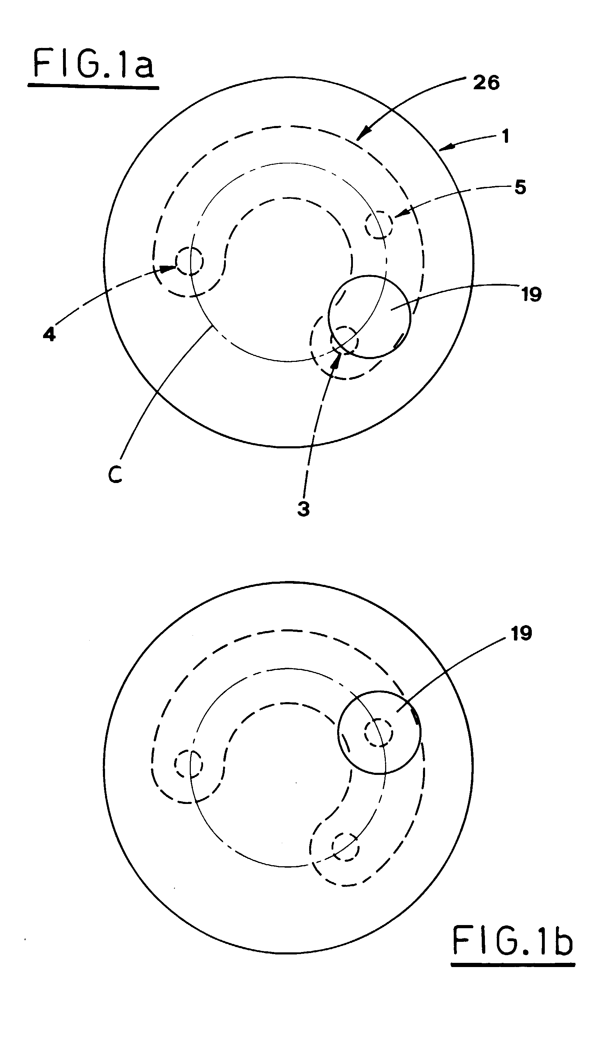

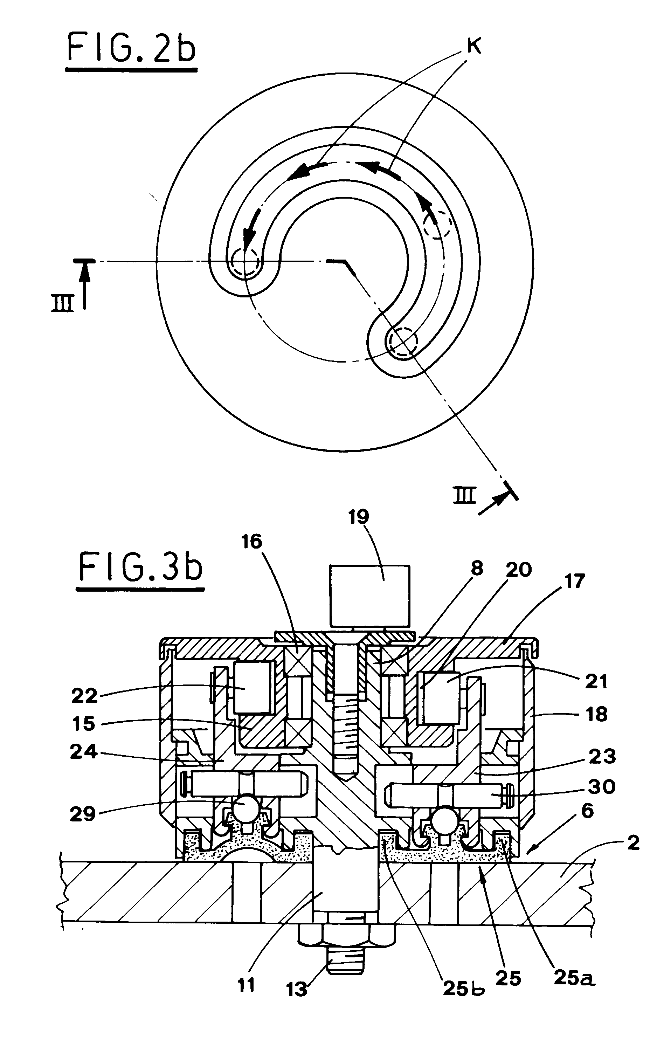

On its upper part, the cap 17 supports an eccentric follower 19 (see Figures 1a, 1b, 3a, 3b), which rotates axially and is kept by suitably elastic screw means, not shown.

The tubular portion 15 of the upper body 7 has a ring-like groove 20, which defines an axial cam.

This cam 20 is engaged by a pair of idle rollers 21,22 rotatably carried by the upper part of respective plungers 23, 24. The rollers 21,22 have horizontal axes and are disposed on radial directions with respect to the valve. The plungers 23,24 are slidably guided in vertical direction in the lower body 6, through respective openings made in the region of the bores 3, 4.

A diaphragm 25, made of plastic material and aimed at being tightened to the upper surface of the platform 2, is connected to the lower body 6.

The diaphragm 25 includes a drilled disc, with ribs 25a, 25b made along its internal and external edges. The ribs 25a,25b can be introduced into respective ring-like seats made in the lower surface of the lower body 6.

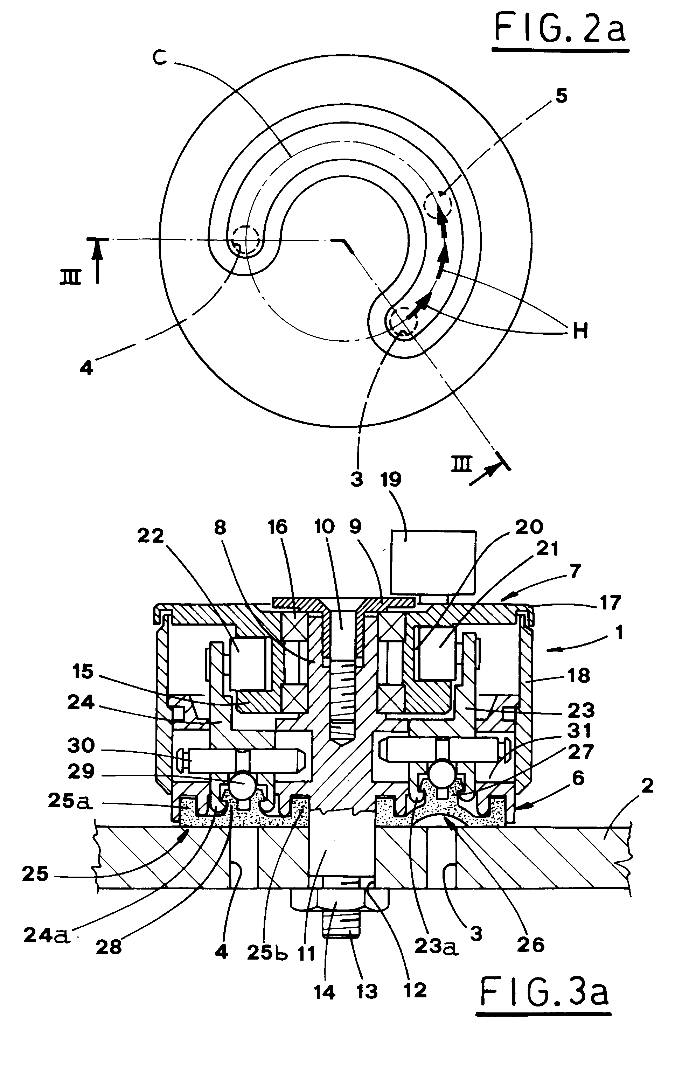

In its lower part, the diaphragm 25 has an arc-like channel 26, which extends along more than a half of the aforementioned circumference C, so as to include the bores 3, 4 and 5 (figs 2a and 2b).

The channel 26 is closed by the facing surface of the platform 2.

In its upper part, the diaphragm 25 forms a couple of relieves 27, 28, substantially mushroom-like, which, when in assembling position, are aligned with the plungers 23,24, respectively.

The relieves 27, 28 are hooked by a lip 23a, 24a, formed in the lower part of the aforementioned plungers.

The relieves 27, 28 define a support seat for a ball 29, housed in a respective lower cavity of the plungers 23, 24 in the region of the respective lip 23a, 24a.

The ball 29 is engaged by a peg 30, fastened transversally with respect to the plungers 23, 24, within radial cavities 31 of the body 6.

Valve operation will be described now, beginning with the liquid suction step, as seen in the Figures la, 2a and 3a.

During this step, the bore 3 of the liquid feeding chamber is connected, via the channel 26 of the diaphragm 25, with the inlet bore 5 of the pump means (arrows H, Figure 2a).

Therefore, these pump means are connected with the aforementioned feeding chamber and can suck the liquid.

In order to do this, the first plunger 23 is moved to the raised position, thus opening the bore 3, so as to allow the liquid to pass therethrough, while the second plunger 24 is set in the lowered position, thus closing the bore 4.

Closing of the bore 4 is determined by elastic deformation of the diaphragm 25, which, stressed by the plunger 24, squashes on the platform 2, thus closing the bore 4 aperture (Figure 3a).

When the liquid suction step has been completed, the container to be filled is prepared for the liquid supply, having the supply nozzle introduced therein.

In order to make the pump means start the liquid delivery, the valve is operated to connect the bore 5 with the bore 4 of the distributing nozzle by the channel 26 of the diaphragm 25, as shown in Figure 2b by arrows K.

For this purpose, the eccentric follower 19 of the valve is struck by a suitable stationary striker (not shown, e.g. of the type illustrated in the European Patent No. 0.486.440), thus causing rotation of the upper body 7 with respect to the stationary lower body 6.

In this way, due to rotation of the cam 20, the first plunger 23 is moved to the lowered position, closing the bore 3, while vice-versa, the second plunger 24 is moved to the raised position, thus opening the bore 4 and allowing the liquid to pass to the distribution nozzle.

The raising of the plunger 24 allows the diaphragm 25 to return to the rest position, which defines the channel 26, while on the opposite side, the diaphragm 25 is deformed by the lowering of the plunger 23, so as to be squashed closing the bore 3 (Figure 3b).

The container filling is completed with the interruption of the liquid supply, obtained by disconnecting the container from the distribution nozzle in proper time relation.

Afterwards, the valve eccentric follower 19 is pushed by another stationary striker, causing the rotation of the body 7, which returns to its initial position, i.e. position in which the bore 3 communicates with the pump means through the channel 26.

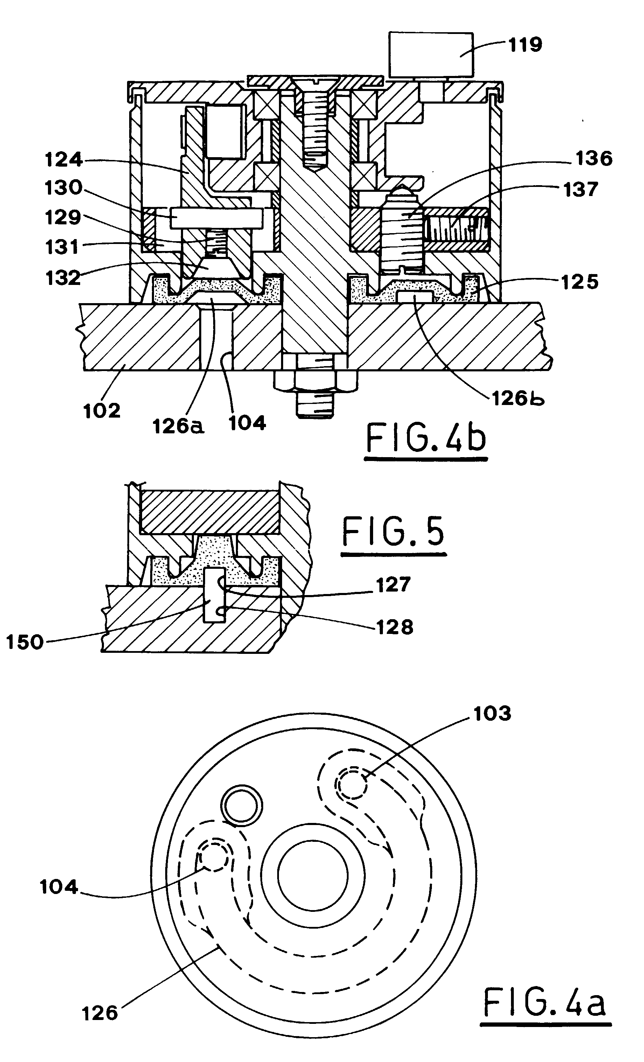

Figures 4a and 4b show a different embodiment of the valve made in accordance with the invention.

In this embodiment, the diaphragm is indicated with 125 and has a channel 126 with diverse sections along its extension, while it has a flat top, without relieves. The ribs are still present along the internal and external edges of the disk forming the diaphragm. In the region of the bores 103 and 104, to be closed alternately during operation of the valve, the section of the channel 126 is trapezoidal. One of these regions is indicated with 126a in Figure 4b. Out of the region of the bores 103,104, the channel 126 has a rectangular section, as indicated with 126b in Figure 4b. The width of the channel 126 out of the regions of the bores 103,104 is equal to the minimum width of the channel 126 in the regions of the bores, as it appears in Figure 4a.

Close to the end of the channel 126 the diaphragm 125 has a blind hole 127 which matches a blind hole 128 made in the base 102 of the valve. A stop peg 150 is inserted into the two holes 127 and 128 and serves as reference for positioning of the diaphragm during montage of the valve (See Figure 5).

As shown in Figure 4b, the plungers 124, only one of which has been illustrated, have another shape at the bottom, with reference to the first embodiment.

Each plunger 124 has a frustum recess 132 made in the bottom with trapezoidal section. The open side of the recess 132 has the maximum diameter and faces a respective enlarged channel zone 126a of the diaphragm. The upper surface of the frustum recess 132 features a threaded through hole into which there is screwed a fixing dowel 129 for locking the peg 130 sliding in the radial cavity 131 of the valve body.

Operation of the valve is the same as for the first embodiment. When the stationary striker pushes the follower 119, the upper body rotates and the plungers are raise and lowered. The bores are closed by squashing the diaphragm on the platform 102. The outline of the frustum recess 132 opening is not sharp, but narrow enough to give an improved closing effect, due to higher local pressure thus obtained.

In a threaded vertical hole of the stationary lower body there is inserted a locking dowel 136 whose tip bears a ball subjected to the action of a spring (the spring is not shown). The dowel 136 is fixed by a security, dowel 137 screwed in a radial hole of the stationary body.

The ball of the dowel 136 enters corresponding holes made in the lower surface of the tubular portion 15 so as to lock resiliently its rotation when it takes characteristic operation positions.

In all the embodiments just described, the valve supplies liquid to the containers carried by the rotating carrousel of filling machines in a certainly practical way.

It is to be pointed out that alternate closing of the bores 3,4 is obtained by elastic deformation of the diaphragm 25, which forms the channel 26 through which the sucked and supplied liquid passes.

Therefore, contact parts moving with respect one to another, reciprocally sliding, causing wear problems, are avoided.

Moreover, the valve structure is particularly simple, which is advantageous for the functionality and use security.

It is understood that what above, has been described as a mere, not limitative example, therefore possible variants resulting from practice and use are protected by the present invention as described above and claimed hereinafter.

## Claims

1. Hydraulic multi-way valve, in particular for automatic machines for filling containers with liquid substances, including:
a lower body (6) fastened to a carrousel platform (2 ;102), in which at least two bores (3,4 ; 103,104) are made, communicating with a liquid supplying chamber and with liquid delivery means and another bore (5) communicating with a pump;
an upper body (7) turning with respect to said lower body (6) and rotated between a liquid suction position and a liquid delivery position ;
said valve being characterised in that it includes a diaphragm (25 ; 125), made of elastic material and featurinq a channel (26 ; 126), which faces said platform (2 ; 102) and extends in such a way as to include the bores (3,4,5 ; 103,104);
a pair of vertically sliding plungers (23,24 ; 124), carried by the lower body (6) over the diaphragm (25 ; 125) for acting thereon in regions of said bores (3,4 ; 103,104) and operated alternately between a raised position, in which the bores (3,4 ; 103,104) are opened and a lowered position, in which the bores are closed, when the upper body (7) is located in said suction and distribution positions respectively.

2. Valve, according to claim 1, characterised in that the channel (26 ; 126) follows an arc along a circumference (C) concentric with the axis of the valve, the axes of the bores (3,4,5 ; 103,104) being disposed along said circumference (C).

3. Valve, according to claim 1, characterised in that the upper body (7) has a ring-like groove (20), which defines an axial cam, engaged by a pair of idle rollers (21, 22) rotatably carried by the upper part of respective plungers (23, 24 ; 124), said rollers having horizontal axes and being disposed on radial directions with respect to the valve

4. Valve, according to claim 1, characterised in that in its upper part, the diaphragm (25) forms a couple of relieves (27, 28), substantially mushroom-like, which are set in alignment with the plungers (23,24) and hooked by a lip (23a, 24a), formed in the lower part of said plungers (23, 24).

5. Valve, according to claim 4, characterised in that said relieves (27, 28) define a support seat for a ball (29), housed in a respective lower cavity of the plungers (23, 24) in the region of a respective lip (23a, 24a), with the ball (29) engaged by a peg (30), fastened transversally with respect to the plungers (23, 24).

6. Valve, according to claim 1, characterised in that the top surface of the diaphragm (125) is flat and each plunger (124) has a frustum recess (132) made in the bottom ad facing the region of a related bore (103,104) to be closed.

7. Valve according to claim 6, characterised in that said channel (126) has trapezoidal cross section to form enlarged zones (126a) in the region of the bores (103,104) to be closed and rectangular cross section (126b) out of said region of said bores (103,104) to be closed.

8. Valve according to claim 6, characterised in that close to the end of said channel (126) the diaphragm (125) has a blind hole (127) which matches a blind hole (128) made in the base (102) of the valve, with a stop peg (150) inserted into the two holes (127,128) as reference for positioning of the diaphragm (125).

9. Valve, according to claim 1, characterised in that said diaphragm (25 ; 125) is formed by a disc, with ribs (25a, 25b) made along its internal and external edges which enter corresponding ring-like seats made in the lower surface of the lower body (6).
